# EUROPEAN PATENT SPECIFICATION

(11) **EP 4 183 633 B1**
(45) Date of publication and mention of the grant of the patent: **14.02.2024**
(21) Application number: 22020548.8
(22) Date of filing: 11.11.2022
(51) Int. Cl.: B60R 9/05, B60R 9/052

(54) **PROFILE OF A CROSSBAR, ESPECIALLY FOR MOUNTING TO ROOF RAILS ON VEHICLES**
PROFIL EINER TRAVERSE, INSBESONDERE ZUR MONTAGE AN DACHSCHIENEN AN FAHRZEUGEN
PROFILÉ DE TRAVERSE, EN PARTICULIER POUR LE MONTAGE SUR RAILS DE TOIT DE VÉHICULES

(30) Priority: 23.11.2021 CZ 20210528
(43) Date of publication of application: 24.05.2023
(73) Proprietor: ACL Technology s.r.o., 463 12 Liberec, Liberec XXIII-Doubi (CZ)
(72) Inventor: Böhm, Vladimír, 252 10 Mnisek pod Brdy (CZ); Klimes, Jan, 460 10 Liberec X (CZ)
(74) Representative: Soukup, Petr

(56) References cited:
- EP-B1- 2 570 304
- WO-A1-92/12874
- WO-A1-99/54168
- DE-A1- 10 012 905

## Description

### Field of the invention

The present invention relates to the outer shape of the profile of a crossbar carrier, especially for mounting to roof rails on vehicles, designed for fitting luggage for vehicles such as cars or boats. The outer shape can also be advantageously used for fitting the flaps of antennas, radars on boats and cars.

### Background of the invention

Roof rack luggage carriers usually consist of two crossbars arranged across the vehicle roof. Each crossbar is fitted with a foot which holds the crossbar in position above the roof. The foot is usually attached to the crossbar carrier on one end and is typically attached to the vehicle at the other end. The foot is also referred to in some publications as a side support foot, as for example in patent file CZ 280424 B6. This foot is most often attached to the roof rail using holding clamps; another option is attachment to the roof rail or directly to the roof using bolts.

The carrier crossbars are usually designed as extruded aluminium profiles. The outer shape of the profile varies. Simple embodiments have the shape of a square with rounded corners or a rectangle with rounded corners. More complex shapes are designed for better airflow than the simple shapes, and therefore have the shape of a wing or a similar aerodynamic shape. The shape of some crossbars is also intended to improve the downforce on the vehicle, such as what is described, for example, in file DE 10012905 A1.

Roof rack profiles usually have a slot at the top for T-shape clamping bolts which are used to secure the load on the carrier.

Patent file DE 10012905 A1 deals with airflow around the carrier itself. The carrier crossbar cross-section has slots for the insertion of turbulators, made in the form of elastic shaped parts, which after insertion into the profile protrude above the carrier crossbar outer shape. The turbulators are inserted into the profile in a direction perpendicular to the direction of the travel, i.e. in the direction of the profile axis. The upper turbulator is designed to disturb the flow around the clamping bolt T-slot, and thus prevent the hum that this slot produces if not covered or otherwise treated. There is also a turbulator on the underside which controls the diffusion of the lower and upper airflow behind the thickest part of the profile. The patent mentioned above further seeks to achieve downforce by means of the appropriate shape and position of the turbulators to increase the vehicle's driving stability.

File WO 9954168 A1 deals with the airflow over the clamping bolt T-slot, by inserting a flexible compressible member into the slot, aiming to achieve a better transition of the bypassing airflow from the part of the outer shape in front of the slot to the surface of the flexible member covering the slot, and then the transition to the outer shape behind the slot. The beam itself has a generally profiled cross-section with an upward and downward projection on its front side in the direction of travel. When used, the projections in the leading edge create a turbulent flow with sufficient energy to cause the airflow to move away from the bypassed shape, thus achieving a smooth transition in the area where the flexible member inside the slot connects to the surrounding beam profile. Due to the ambient turbulence, sharp edges, free spaces in the transition region and other imperfections of the connection of the elastic member in the T-slot to the surrounding profile are not manifested, because it is known that turbulent flows are less prone to periodic oscillation and the associated noise manifestation compared to laminar flow. In terms of air flow, this file again only deals with the airflow around the profile itself as regards the horizontal flow direction and further only deals with the foot itself and the attachment of the carrier crossbar to the foot.

Patent file EP 2 570 304 B1 correctly represents the above general background, and further deals with the connection of the carrier crossbar to the foot of the carrier. In particular, it deals with the solution of connecting the crossbar profile to the foot, in order to save as much space as possible. Furthermore, common designs of crossbars are known, which have a square or rectangular profile in the cross section, see patent files DE 3516483 A1, DE 3104163 A1, or a circular profile, see patent file DE 3510805 A1. These designs do not significantly address the aerodynamic characteristics and the associated airflow. This results in various adverse noise effects when used at higher driving speeds.

It is also known the design of vehicle roof carrier according to the file WO 9212874 that corresponds to the preamble of claim 1 and solves upper and also lower airflow disturbance means. This design does not deal with the place and position of the carrier on the roof of the vehicle, further, it does not deal with the interaction with the surroundings. Thus this design operates independently in a place where the airflow is already stable and non-disturbed by the air bypass around the vehicle. By the help of the airflow disturbance means is solved the airflow diversion from the clamping carrier places for the equipment and also is improved the air bypass around the carrier profile. This construction design does not solve the interaction of the airflow with the vehicle roof, thus the carrier can not be placed in a place where the airflow is not yet stable and in the same time is thickened by the interaction with the front screen and has nonzero airflow incidence angle which has significant impact on the air bypass of the carrier and can cause rise of the undesirable noise effects during the ride.

The object of the present invention is to reduce the noise manifestation in the vehicle resulting from the air bypass at its strong positive incidence angle, at the point of the airflow compaction from the vehicle nose, while taking into account the simultaneous interaction of the outgoing airflow with the vehicle roof. This is achieved both by diverting the laminar flow away from the bottom of the profile along its entire depth/length, over a wide range of airflow velocities, which prevents the air mass between the crossbar and the roof from oscillating leading to low frequency noise, and by creating a turbulent drift behind the profile trailing edge. This condition prevents the oscillation of the air mass with high frequency noise manifestation. The described profile can be used without any problems at the point of the densest airflow or the point where the airflow from the whole front part of the vehicle is directed.

Thus, the present invention deals with the suppression of noise manifestations which arise in particular in the area of the front roof rack of the vehicle due to the strong positive incidence direction while the vehicle is moving, and the subsequent interaction with the roof and its immediate surroundings. Thus, the difference from the previous inventions is in particular in the solution that deals with the case where there is a strong positive incidence angle of the airflow, and the solution of the associated more complex issue, as it solves the air bypass around the carrier and at the same time around the roof under the carrier.

### Summary of the invention

The stated objective is achieved by a solution based on a profile of a crossbar carrier, in particular for mounting to the roof rails of vehicles, consisting of a formed solid body, the outer profile of which has a rounded front part and a trailing part at the rear end, wherein the bottom area of the front part has a flat leading surface running diagonally downwards, whereas said flat leading surface is followed by a rounded tear-off projection terminating along its entire length by a tear-off edge, which is located in an area defined by the first interval of 0.31pₛ to 0.73pₛ measured perpendicularly from the determining line a and the second interval of 0,75pₖ to 0.98pₖ, where the determining line a is the line between the furthest point B of the front part and the furthest point A of the outflow part of the body, pₛ is the first determining parameter, based on the diameter of the third circle k₃ inscribed at the point of the greatest width of the encircled cross-sectional profile of the body, and pₖ is the second determining parameter, based on the diameter of the second circle k₂ corresponding to the linear distance between points A and B, said area resulting from the intersection of a first surface defined between two straight lines parallel to the determining line a and spaced from said determining line a by a respective distance of 0.31 pₛ and 0.73 pₛ and a second surface defined between two auxiliary cicles k₄ and k₅, concentric with the second circle k2 and of respective diametres 0.75 pₖ and 0.98 pₖ.

In a preferred embodiment, the leading surface is inclined from determining line a at an angle of 65° to 85°, i.e. angle *α* of the inclination of the leading surface to tangent c leading through point *B* perpendicular to determining line a is within the angular range of 5° to 25°.

In an optimal embodiment, the tear-off edge of the tear-off projection is sharp or is formed with a minimum radius *r* within the range of r = 0.1 × ( pₛ + pₖ)/2.

The present invention achieves new and higher effect by precisely dimensional embodiment and positioning of the tear-off edge projection in the lower area of the full width of the leading part of the outer profile, to suppress the noise manifestation of the flowing air mass by suppressing its oscillation over the entire crossbar carrier profile width, while the air flow interacts with the roof of the vehicle.

### Description of drawings

Specific examples of the invention embodiments are shown in the accompanying drawings where:

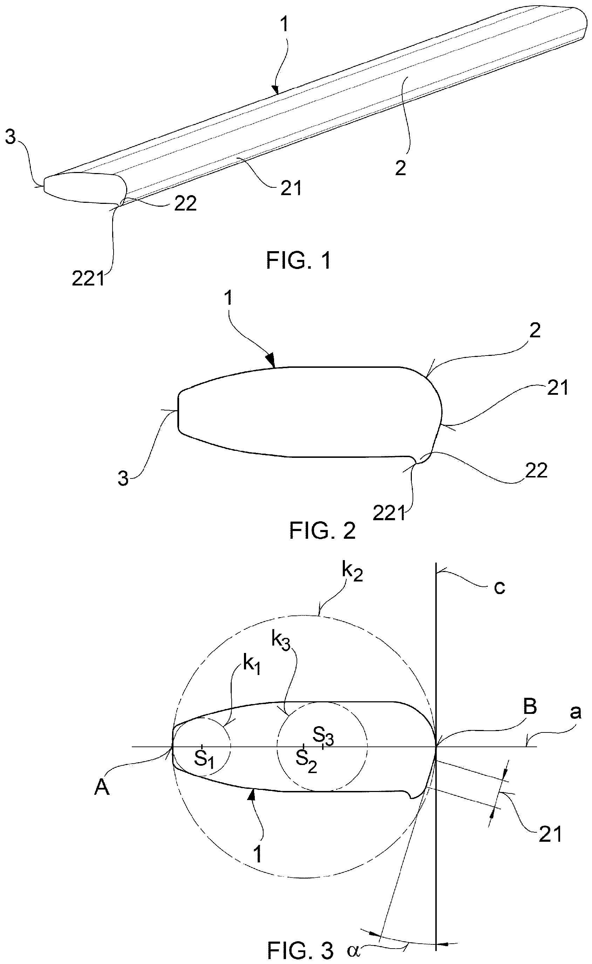

Fig.1 is the overall axonometric view of the crossbar carrier,
Fig. 2 is a vertical cross-section through the crossbar carrier profile from Fig. 1, perpendicular to its longitudinal axis, without showing the design parameters,
Fig.3 is a vertical cross-section of the crossbar carrier profile from Fig. 2, showing the basic design parameters,
Fig. 4 is a vertical cross-section of the crossbar carrier profile from Fig. 2, showing parameters p_{K} and p_{S},
Fig. 5 is a vertical cross-section of the crossbar carrier profile from Fig. 2, showing the parameters of the tear-off edge location using four dimensions,
Fig. 6 is a detail of the basic embodiment of the tear-off projection ended with a sharp tear-off edge, and
Fig. 7 is a detail of an alternative embodiment of the tear-off projection with a rounded tear-off edge.

The drawings illustrating the presented invention and the following examples of particular embodiments do not in any way limit the scope of protection stipulated in the definition, but merely illustrate the principle of the invention.

### Examples of invention embodiments

A crossbar roof rack for mounting to the roof rails of vehicles, in particular cars, comprises a shaped solid body 1 with an outer profile with a rounded front part 2, i.e. a front designed for the flow of air while the car is moving, and a trailing part 3 in the end rear part, where a diagonally sloping planar leading surface 21 is formed in the bottom area of the front part 2, followed by a rounded tear-off projection 22 terminating with a tear-off edge 221 along its entire length.

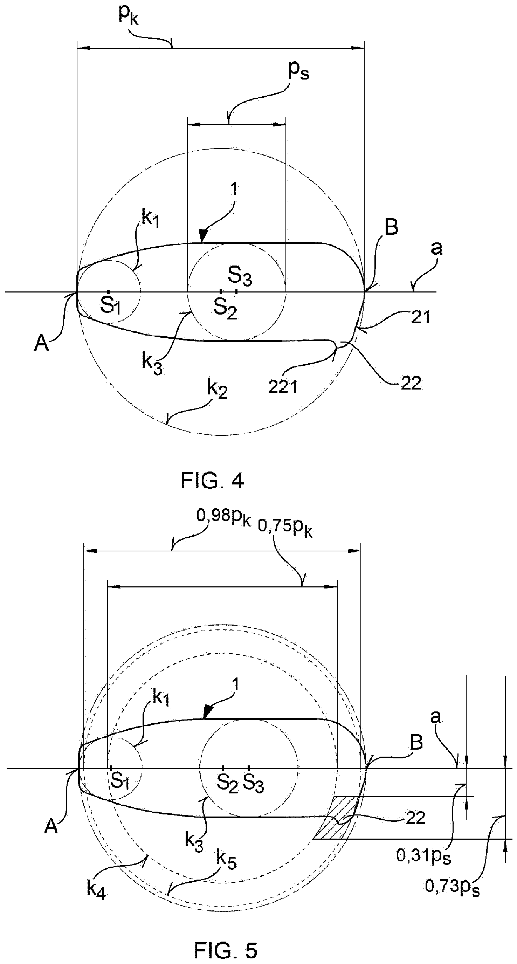

The actual location of the tear-off projection 22 and its tear-off edge 221 is based on the results of long-term research supported by many experiments, when the diameter of the first circle k₁ of the inscribed outflow part 3 was chosen as the basic parameters of the cross-section of the proposed profile, the diameter of the second circle k₂ over the outermost point B of the front part 2 and the outermost point A of the trailing part 3 of the body 1 connected by the determining line a, the diameter of the third circle k₃ inscribed at the point of the greatest width of the bypassed cross-sectional profile of the body 1 and the angle of inclination α of the leading surface 21 to the tangent c drawn by the point B perpendicular to the determining line a. The first determining parameter pₛ is based on the diameter of the third circle k₃ and the second determining parameter pₖ is given by the diameter of the second circle k₂, as can be seen in Fig. 4.

As shown in fig. 5, the tear-off edge 221 of the tear-off projection 22 is located in an area defined by the first interval of between 0.31pₛ and 0.73pₛ measured perpendicularly from the determining line a and the second interval of between 0.75 pₖ and 0,98pₖ measured between auxiliary circles k₄ and k₅, concentric with the second circle k₂. The leading surface 21 is inclined from determining line a at an angle of 65° to 85°, i.e. angle α of the inclination of the leading surface 21 to tangent c is within the angular range of 5° to 25°.

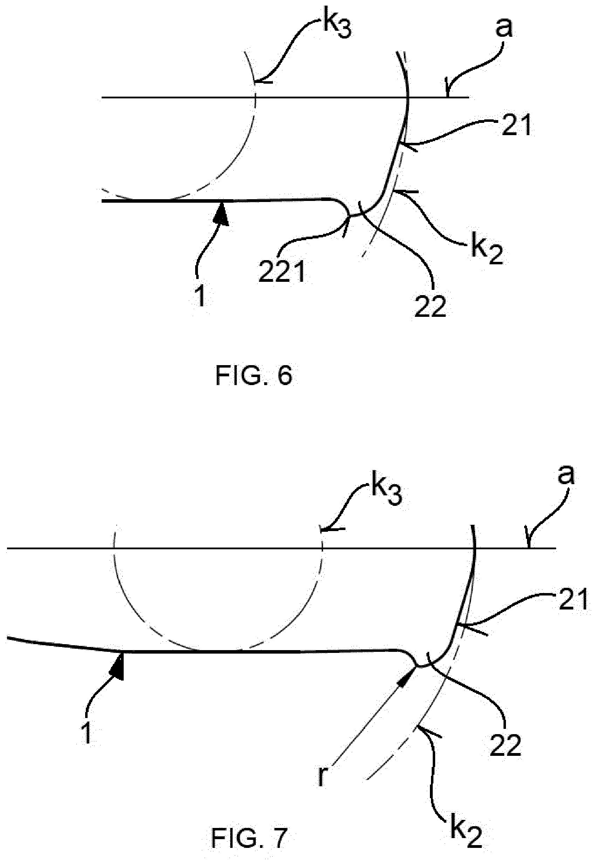

The tear-off edge 221 as a technical term describing the part of the profile bypassed by air where the airflow is separated from the crossbar carrier should ideally be formed by a sharp connection of two surfaces, i.e. it should ideally be an edge. With respect to the manufacturing capabilities, such a condition can never be achieved, and instead of an edge, there is typically a minimum rounding at this area, which can have a maximum radius of r within the range of r = 0.1 × (pₛ + pₖ)/2 to maintain due functionality, as shown in Fig. 7.

In a specific and verified case, the functional crossbar carrier had the following parameters:
- the first determining parameter pₛ (diameter of the third circle k₃) of 29.4mm
- perpendicular distance of the tear-off edge 221 from the determining line a of 15.7mm
- the second determining parameter pₖ (diameter of the third circle k₂) of 80mm
- diameter of auxiliary circles of 72mm
- radius of the curvature of the roundness of the tear-off projection 22 with the size of 5mm
- angle of inclination of the leading surface 21 from the determining line a of 73.28°
- radius r of the roundness of the tear-off edge 221 of 1.8mm.

### Industrial applicability

The present invention is applicable especially for the design of the profile of a crossbar carrier, designed for mounting to roof rails on vehicles, designed for fitting luggage for vehicles such as cars or boats. The outer shape can also be advantageously used for fitting the flaps of antennas, radars on boats and cars.

### List of reference symbols

1 body
2 front part
21 leading surface
22 tear-off projection
221 tear-off edge
3 trailing part
k₁ first circle
k₂ second circle
k₃ third circle
k₄ fourth circle, i.e. circle with centre at S₂ and a diameter of 0.75 times the diameter of circle k₂
k₅ fifth circle, i.e. circle with centre at S₂ and a diameter of 0.98 times the diameter of circle k₂
S₁ centre of the first circle
S₂ centre of the second circle
S₃ centre of the third circle
a determining line passing through end points A and B of the body
c tangent line leading through point B perpendicular to determining line a
α angle of inclination of the leading surface 21 to tangent c
pₛ the first determining parameter, based on the diameter of the third circle k₃.
pₖ the second determining parameter, based on the direct distance between points A and B.

## Claims

1. Profile of a crossbar carrier, in particular for mounting to the roof rails of vehicles, consisting of a formed solid body (1), the outer profile of which has a rounded front part and a trailing part at the rear end, wherein the bottom area of the front part (2) has a flat leading surface (21) running diagonally downwards, **characterized in that** said flat leading surface (21) is followed by a rounded tear-off projection (22) terminating along its entire length by a tear-off edge (221), which is located in an area defined by the first interval of 0.31pₛ to 0.73pₛ measured perpendicularly from the determining line (a) and the second interval of 0,75pₖ to 0.98pₖ, where the determining line (a) is the line between the furthest point (B) of the front part (2) and the furthest point (A) of the outflow part (3) of the body (1), (pₛ) is the first determining parameter, based on the diameter of the third circle (k₃) inscribed at the point of the greatest width of the encircled cross-sectional profile of the body (1), and (pₖ) is the second determining parameter, based on the diameter of the second circle (k₂) corresponding to the linear distance between points (A) and (B), said area resulting from the intersection of a first surface defined between two straight lines parallel to the determining line (a) and spaced from said determining line (a) by a respective distance of 0.31 pₛ and 0.73 pₛ and a second surface defined between two auxiliary circles (k4) and (k5), concentric with the second circle (k2) and of respective diametres 0.75 pₖ and 0.98 pₖ.

2. The profile of the crossbar carrier according to claim 1, **characterized in that** the leading surface (21) is inclined from determining line (a) at an angle of 65° to 85°, i.e. angle (α) of the inclination of the leading surface (21) to tangent (c) leading through point (B) perpendicular to determining line (a) is within the angular range of 5° to 25°.

3. The profile of the crossbar carrier according to claim 1, **characterized in that** the tear-off edge (221) of the tear-off projection (22) is sharp or is formed with a maximum radius (r) within the range of r = 0.1 × ( pₛ + pₖ)/2.

## Patentansprüche

1. Profil eines Querträgers, insbesondere zur Montage an der Dachreling von Fahrzeugen, bestehend aus einem massiven Festkörper (1), dessen Außenprofil einen abgerundeten Vorderteil und einen nachlaufenden Teil am hinteren Ende aufweist, wobei der untere Bereich des Vorderteils (2) eine schräg nach unten verlaufende ebene Anlauffläche (21) aufweist, ist **dadurch gekennzeichnet, dass** sich an die ebene Anlauffläche (21) ein abgerundeter Abrissvorsprung (22) anschließt, der über seine gesamte Länge in einer Abrisskante (221) endet, die in einem Bereich liegt, der durch den ersten Abstand von 0,31pₛ bis 0,73pₛ, gemessen senkrecht von der Bestimmungslinie (a), und dem zweiten Intervall von 0,75pₖ bis 0,98pₖ definiert ist, wobei die Bestimmungslinie (a) die Linie zwischen dem am weitesten entfernten Punkt (B) des vorderen Teils (2) und dem am weitesten entfernten Punkt (A) des Auslaufteils (3) des Körpers (1) ist, (pₛ) der erste Bestimmungsparameter ist, der auf dem Durchmesser des dritten Kreises (k₃) beruht, der in den Punkt der größten Breite des umschlossenen Querschnittsprofils des Körpers (1) eingeschrieben ist, und (pₖ) der zweite Bestimmungsparameter ist, der auf dem Durchmesser des zweiten Kreises (k₂) basiert, der dem linearen Abstand zwischen den Punkten (A) und (B) entspricht, wobei sich die Fläche aus dem Schnittpunkt der ersten Fläche ergibt, die zwischen zwei Geraden definiert ist, die parallel zur Bestimmungslinie (a) verlaufen und von der Bestimmungslinie (a) jeweils um einen Abstand von 0,31 pₛ und 0,73 pₛ von der Bestimmungslinie (a) entfernt sind, und einer zweiten Fläche, die zwischen zwei Hilfskreisen (k4) und (k5) definiert ist, die zum zweiten Kreis (k2) konzentrisch sind und einen Durchmesser von 0,75 pₖ bzw. 0,98 pₖ haben.

2. Das Profil des Querträgers nach Patentanspruch 1 ist **dadurch gekennzeichnet, dass** die Vorderfläche (21) von der Bestimmungslinie (a) in einem Winkel von 65° bis 85° geneigt ist, d. h. der Winkel (α) der Neigung der Vorderfläche (21) zur Tangente (c), die durch den Punkt (B) senkrecht zur Bestimmungslinie (a) führt, liegt im Winkelbereich von 5° bis 25°.

3. Das Profil des Querträgers nach Patentanspruch 1 ist **dadurch gekennzeichnet, dass** die Abrisskante (221) des Abrissvorsprungs (22) scharf ist oder mit einem maximalen Radius (r) im Bereich von r = 0.1 × ( pₛ + pₖ)/2 geformt ist.

## Revendications

1. Profil d'un support de barre transversale, en particulier pour le montage sur les barres de toit de véhicules, constitué d'un corps solide formé (1), dont le profil extérieur présente une partie avant arrondie et une partie arrière, dans lequel la partie inférieure de la partie avant (2) présente une surface d'attaque plate (21) s'étendant en diagonale vers le bas, **caractérisé en ce que** ladite surface d'attaque plate (21) est suivie d'une saillie d'arrachement arrondie (22) se terminant sur toute sa longueur par un bord d'arrachement (221), qui est situé dans une zone définie par le premier intervalle de 0.₃₁ₚₛ à 0,₇₃ₚₛ mesuré perpendiculairement à la ligne de détermination (a) et le second intervalle de 0,₇₅ₚₖ à 0.₉₈ₚₖ, où la ligne déterminante (a) est la ligne entre le point le plus éloigné (B) de la partie avant (2) et le point le plus éloigné (A) de la partie d'écoulement (3) du corps (1), (ₚₛ) est le premier paramètre de détermination, basé sur le diamètre du troisième cercle (ₖ₃) inscrit au point de la plus grande largeur du profil transversal encerclé du corps (1), et (ₚₖ) est le deuxième paramètre déterminant, basé sur le diamètre du deuxième cercle (ₖ₂) correspondant à la distance linéaire entre les points (A) et (B), ladite surface résultant de l'intersection d'une première surface définie entre deux lignes droites parallèles à la ligne de détermination (a) et espacées de ladite ligne de détermination (a) d'une distance respective de 0.31 _{ps et} 0,73ₚₛ et une deuxième surface définie entre deux cercles auxiliaires (k4) et (k5), concentriques au deuxième cercle (k2) et de diamètres respectifs 0,75 pkₑₜ 0,98 pk.

2. Le profil du support de barre transversale selon la revendication 1, **caractérisé en ce que** la surface d'attaque (21) est inclinée par rapport à la ligne déterminante (a) à un angle de 65° à 85°, c'est-à-dire que l'angle (α) de l'inclinaison de la surface d'attaque (21) à la tangente (c) passant par le point (B) perpendiculaire à la ligne déterminante (a) est compris dans la plage angulaire de 5° à 25°.

3. Le profil du support de traverse selon la revendication 1, **caractérisé en ce que** le bord d'arrachement (221) de la saillie d'arrachement (22) est aigu ou est formé avec un rayon maximal (r) dans la plage de r = 0,1 × (ₚₛ + ₚₖ)/2.
